Europäisches Patentamt

European Patent Office

Office européen des brevets

(19)

(11) Veröffentlichungsnummer: **0 374 447**
**A1**

(12) **EUROPÄISCHE PATENTANMELDUNG**

(21) Anmeldenummer: 89120455.4

(22) Anmeldetag: 06.11.89

(51) Int. Cl.⁵: **E04F 10/02, E04F 10/08, E06B 7/28**

(30) Priorität: 20.12.88 DE 8815768 U

(43) Veröffentlichungstag der Anmeldung:
27.06.90 Patentblatt 90/26

(84) Benannte Vertragsstaaten:
**DE FR GB IT NL SE**

(71) Anmelder: **Seitz, Eugen**
**Allmersbacher Strasse 50**
**D-7152 Aspach 2(DE)**

(72) Erfinder: **Seitz, Eugen**
**Allmersbacher Strasse 50**
**D-7152 Aspach 2(DE)**

(74) Vertreter: **Patentanwälte Dipl.-Ing. Alex**
**Stenger Dipl.-Ing. Wolfram Watzke Dipl.-Ing.**
**Heinz J. Ring**
**Kaiser-Friedrich-Ring 70**
**D-4000 Düsseldorf 11(DE)**

(54) **Fensterrahmen.**

(57) Die Erfindung betrifft einen zweiteiligen Fensterrahmen, insbesondere für Wohnanhänger, Wohnmobile oder dgl., dessen Außenrahmen (1) zwecks Aufnahme des oberen Randes der Fensterscheibe (5) bzw. zur Anlenkung einer am oberen Rand der Fensterscheibe (5) angeordneten Scharnierschiene (6) mit einer Profilschiene (7) versehen ist, die mit einer über die gesamte Breite des oberen Querholms des Außenrahmens (1) verlaufenden Aufnahmenut (8) versehen ist. Um einen zweiteiligen Fensterrahmen der eingangs beschriebenen Art derart weiterzubilden, daß er auf einfache Weise zur Halterung und Abstützung von diversen Zubehörteilen herangezogen werden kann, wird mit der Erfindung vorgeschlagen, daß am unteren Querholm (13) des Fensterrahmens eine über dessen gesamte Breite verlaufende weitere Profilschiene (12) mit einer Einschubnut (14) zur Anbringung eines Zubehörteils (9,10,18,19a,19b,19c,20) ausgebildet ist.

Fig.1

## Fensterrahmen

Die Erfindung betrifft einen zweiteiligen Fensterrahmen, insbesondere für Wohnanhänger, Wohnmobile oder dgl., dessen Außenrahmen zwecks Aufnahme des oberen Randes der Fensterscheibe bzw. zur Anlenkung einer am oberen Rand der Fensterscheibe angeordneten Scharnierschiene mit einer Profilschiene versehen ist, die mit einer über die gesamte Breite des oberen Querholmes des Außenrahmens verlaufenden Aufnahmenut versehen ist.

Zweiteilige Fensterrahmen, vorzugsweise aus Kunststoff, sind in verschiedenen Ausführungen bekannt. Oft dient eine am Außenrahmen befestigte Profilschiene zur Anordnung der Fensterscheibe am Fensterrahmen, wobei es verschiedene Anordnungsmöglichkeiten gibt. Neben einer starren Befestigung der Fensterscheibe am Außenrahmen gibt es Ausführungen, bei denen die Profilschiene als Führung für ein Schiebefenster oder als Anlenkung für ein um eine obenliegende Achse aufklappbares Fenster dient.

Bei Wohnanhängern und Wohnmobilen ist es bekannt, oberhalb der Fensteröffnungen Markisen anzuordnen, um insbesondere in südlichen Ländern einen zu starken Lichteinfall zu verhindern. Derartige Markisen werden zumeist unabhängig vom Fenster an der Seiten- oder Stirnwand des Wohnwagens oder Wohnmobils angebracht. Bekannt sind auch oberhalb des Fensters angebrachte Schneeabweiser, die bei Verwendung des Wohnanhängers in schneereichen Gebieten ein Anbacken von Schnee an der Fensterscheibe vermeiden.

Aus dem deutschen Gebrauchsmuster G 87 12 759 ist es außerdem bekannt, die Profilschiene mit einer über die gesamte Breite des oberen Querholms des Außenrahmens verlaufenden Aufnahmenut zu versehen, in die ein Markisenbezug eingeschoben werden kann. Die eigentliche Tragkonstruktion für die Markise befindet sich außerhalb der Wandteile des Wohnanhängers und erfolgt beispielsweise durch Abstützen des dem Fenster abgewandten Endes der Markise mittels eines auf dem Erdboden aufgestellten Zeltgestänges.

Der Erfindung liegt die **Aufgabe** zugrunde, einen zweiteiligen Fensterrahmen der eingangs beschriebenen Art derart weiterzubilden, daß er auf einfache Weise zur Halterung und Abstützung von diversen Zubehörteilen herangezogen werden kann.

Die **Lösung** dieser Aufgabenstellung durch die Erfindung ist dadurch gekennzeichnet, daß am unteren Querholm des Fensterrahmens eine über dessen gesamte Breite verlaufende, weitere Profilschiene mit einer Einschubnut zur Anbringung eines Zubehörteils ausgebildet ist.

Durch diese Ausbildung ist es möglich, eine Markise samt ihrer Tragkonstruktion am Fensterrahmen zu befestigen. Zusätzliche Befestigungsmittel außerhalb des Fensterrahmens sowie abseits des Wohnanhängers oder Wohnmobils aufgestellte Gestänge sind daher nicht mehr erforderlich. Da auf zusätzliche Befestigungsmittel verzichtet werden kann, werden Kosten vermieden und infolge der Montage auftretende Beschädigungen am Wohnanhänger oder Wohnmobil verhindert. Das Aufstellen und Befestigen der Markise ist außerdem erheblich einfacher durchzuführen als bei Verwendung der bekannten, auf dem Erdboden abgestützten Gestänge. Durch die Befestigung im Bereich des un teren Querholmes lassen sich Befestigungs- und Einstellelemente der Markise in Griff- oder Augenhöhe plazieren, wodurch die Handhabung dieses Zubehörteiles verbessert wird.

Die Erfindung ist jedoch nicht auf den Fall der Abstützung einer Markise beschränkt, sondern eignet sich in gleicher Weise zur Halterung und Abstützung eines Schneeabweisers oder ähnlicher Zubehörteile. So kann die Aufnahmenut beispielsweise auch zur Befestigung einer in der kalten Jahreszeit zu verwendenden Isoliermatte herangezogen werden, die das Fenster an seiner Außenseite abdeckt und mit ihrem oberen Rand in der Aufnahmenut der Profilschiene am oberen Querholm des Fensterrahmens sitzt. Die Anbringung der Isoliermatte erfolgt dabei durch Einführen oben und unten an der Isoliermatte angebrachter Keder in die Nuten.

Der erfindungsgemäße Fensterrahmen kann außerdem dazu dienen, Wäschetrockner, Utensilienbehälter, Drahtkörbe oder andere Zubehörteile an der Außenwand des Wohnanhängers oder des Wohnmobils unterhalb des Fensterrahmens anzuordnen.

Gemäß einer Ausgestaltung der Erfindung ist die weitere Profilschiene mit der Außenfläche des unteren Querholmes bündig abschließend an diesem befestigt. Auf diese Weise wird die angestrebte glatte Außenkontur des Wohnanhängers nicht durch hervorstehende Befestigungsteile eingeschränkt. Beim Fahren sind solche abstehenden Teile Ursache für Luftverwirbelungen, wodurch sich der Luftwiderstand des Fahrzeuges verschlechtert.

Gemäß einem weiteren Merkmal der Erfindung sitzt die weitere Profilschiene ihrerseits in einer Befestigungsnut, die sich über die gesamte Breite des unteren Querholmes erstreckt. Da durch ist eine sichere Befestigung der Profilschiene auch bei hoher äußerer Belastung, beispielsweise infolge des Winddrucks, gewährleistet.

Zur schnellen Befestigung und Einstellung des Zubehörteils ist dieses mit mindestens einem Befestigungsschuh verschiebbar in der Einschubnut angeordnet. Auf diese Weise ist auch eine leichte Anpassung an unterschiedliche Breiten des zu befestigenden Zubehörteils, beispielsweise der Markise, möglich.

Mit der Erfindung wird schließlich vorgeschlagen, die untere Profilschiene zweiteilig aus einer am unteren Querholm des Außenrahmens angeordneten Grundschiene und einer an diese Grundschiene ansetzbaren Aufsatzschiene auszubilden, die ihrerseits die Einschubnut zur Anbringung eines Zubehörteils aufweist. Hierdurch ergibt sich die Möglichkeit, bei stets gleicher Grundschiene, die werksseitig am Außenrahmen angeordnet wird, unterschiedliche Aufsatzschienen zu verwenden, deren Einschubnut dem jeweiligen Verwendungszweck bzw. dem jeweiligen Zubehörteil angepaßt ist.

Auf der Zeichnung sind sechs Ausführungsbeispiele des erfindungsgemäßen Fensterrahmes dargestellt, und zwar zeigen:

Fig. 1 einen senkrechten Schnitt durch den unteren Querholm eines in der Wand eines Wohnanhängers oder eines Wohnmobils befestigten Fensterrahmens mit einem daran abgestützten Gestänge eines Zubehörteils;

Fig. 2 einen senkrechten Gesamtschnitt durch einen Außenrahmen mit daran befestigter Markise;

Fig. 3 einen entsprechenden Querschnitt durch einen Außenrahmen mit Schneeabweiser;

Fig. 4 einen entsprechenden Querschnitt durch einen Außenrahmen mit einem daran aufgehängten Wäschetrockner;

Fig. 5 einen entsprechenden Querschnitt durch einen Außenrahmen mit einer daran befestigten Utensilientasche;

Fig. 6 einen entsprechenden Querschnitt durch einen Außenrahmen mit daran befestigten Drahtkörben;

Fig. 7 einen entsprechenden Querschnitt durch einen Außenrahmen mit einer außen vor den Fensterflächen angeordneten Isoliermatte;

Fig. 8 eine alternative Ausführung anhand einer perspektivischen Darstellung, teilweise im Schnitt.

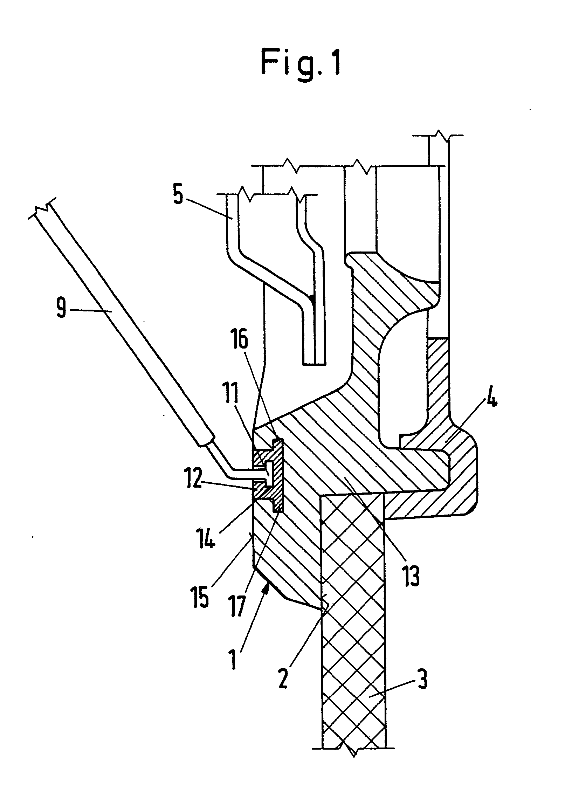

Von dem vorzugsweise für Wohnanhänger und Wohnmobile verwendeten zweiteiligen Fensterrahmen ist in Figur 1 lediglich der untere Querholm des Außenrahmens 1 gezeichnet, der vorzugsweise aus einem geeigneten Kunststoff hergestellt ist und sich mit einem Absatz 2 an einer Außenwand 3 des Wohnanhängers oder des Wohnmobils abstützt. Über einen innenliegenden Befestigungsrahmen 4 wird der Außenrahmen 1 an der Außenwand 3 gehalten. Der Außenrahmen 1 umschließt eine Fensterscheibe 5, die bei sämtlichen dargestellten Ausführungsbeispielen als Doppelscheibe ausgebildet ist.

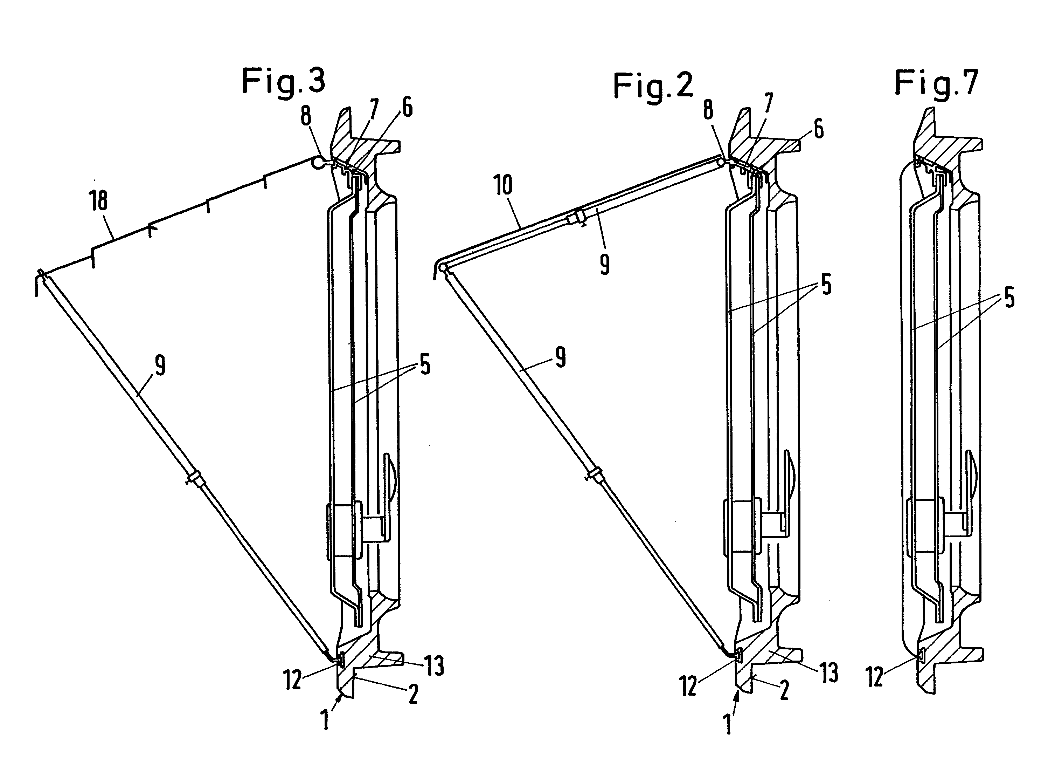

Der Figur 2 ist zu entnehmen, daß die Fensterscheibe 5 mit ihrem oberen Rand an einer Scharnierschiene 6 befestigt ist, die ihrerseits um eine horizontale Achse verschwenkbar an einer Profilschiene 7 befestigt ist. Die Profilschiene 7 befindet sich am oberen Querholm des Außenrahmens 1, über dessen gesamte Breite sie sich erstreckt. Die Profilschiene 7 ist in ihrem nach außen gewandten Bereich mit einer Aufnahmenut 8 versehen, in die bei dem Ausführungsbeispiel gemäß der Figur 2 der obere Teil eines Traggestells 9 für eine Markise 10 eingesetzt ist.

Der untere Teil des Traggestells 9, der ebenso wie der obere Teil als längenverstellbares Gestänge ausgebildet ist, endet in einem im Längsschnitt etwa T-förmigen Befestigungsschuh 11, wie der Figur 1 zu entnehmen ist. Der Befestigungsschuh 11 ist in einer weiteren Profilschiene 12, die in einen unteren Querholm 13 des Fensterrahmens eingelassen ist, horizontal verschiebbar angeordnet. Die weitere Profilschiene 12 weist eine im Querschnitt T-förmige Einschubnut 14 zur Führung des Befestigungsschuhes 11 auf, erstreckt sich über die gesamte Breite des unteren Querholmes 13 und ist soweit in den unteren Querholm 13 des Fensterrahmens eingelassen, daß die weitere Profilschiene 12 mit der Außenfläche 15 des unteren Querholmes 13 bündig abschließt. Die weitere Profilschiene 12 sitzt dazu in einer in der Außenfläche 15 des unteren Querholmes 13 ausgebildeten Befestigungsnut 16 und greift mit Längskanten 17 in Hinterschneidungen dieser Befestigungsnut 16 ein.

Der Figur 3 ist zu entnehmen, daß anstelle einer Markise auch ein Schneeabweiser 18 in der Aufnahmenut 8 der Profilschiene 7 am oberen Querholm befestigt werden kann. Auch der Schneeabweiser 18 stützt sich über ein Traggestell 9 in Gestalt eines längsveränderlichen Gestänges in der weiteren Profilschiene 12 ab.

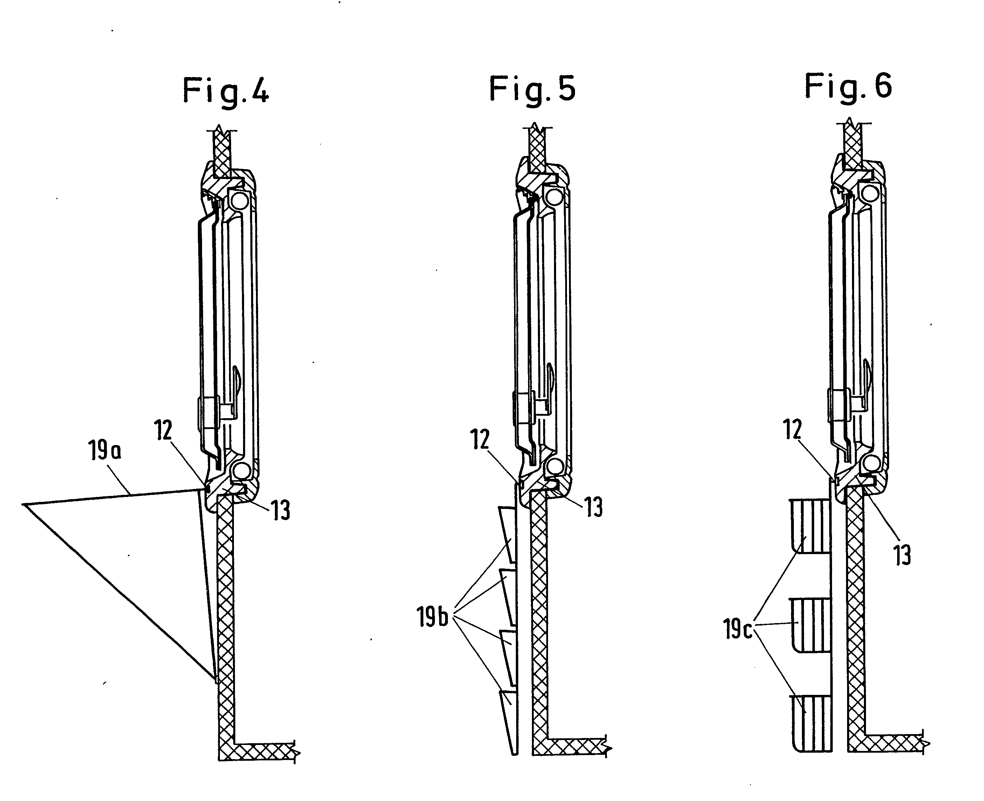

Bei den in den Figuren 4 bis 6 dargestellten Ausführungsbeispielen sind die jeweiligen Zubehörteile 19a,19b,19c, die in diesen Fällen keine Funktion in Bezug auf das Fenster haben, in die weitere Profilschiene 12 am unteren Querholm 13 eingehängt. Figur 4 zeigt einen Wäschetrockner 19a, Figur 5 eine Anordnung von Utensilientaschen 19b und Figur 6 drei Drahtkörbe 19c als Ablagebehälter.

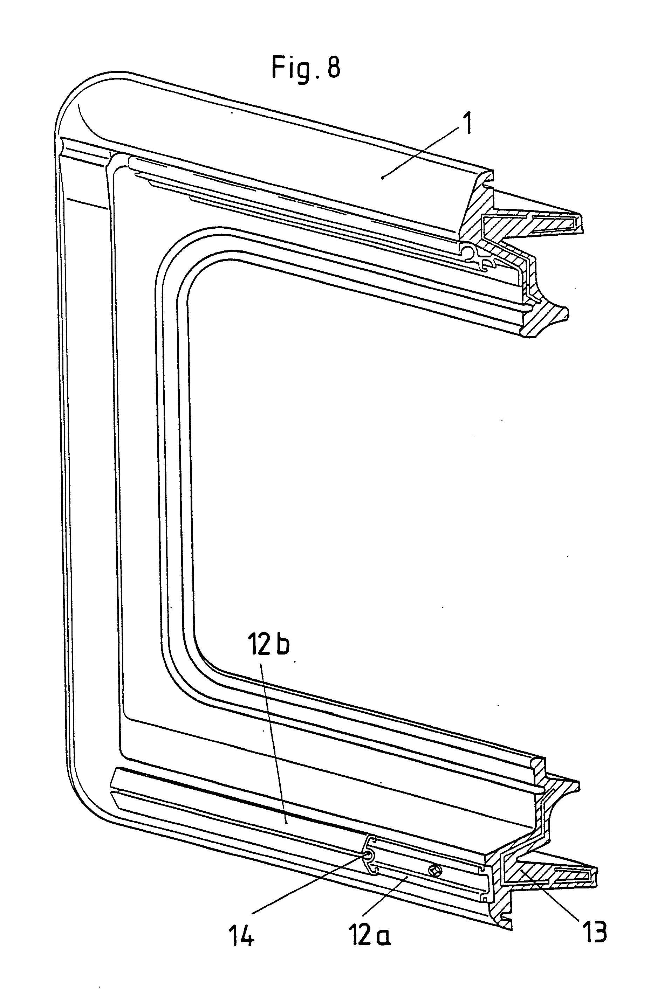

Der Darstellung der Figur 7 ist schließlich zu entnehmen, daß die weitere Profilschiene 12 auch dazu herangezogen werden kann, vor den Fensterscheiben 5 eine Isoliermatte 20 zu befestigen, um in der kalten Jahreszeit einen zu starken Wärmeverlust durch das Fenster hindurch zu vermeiden. Die Isoliermatte 20 ist an ihren oberen und unteren Rändern mit Kedern versehen, die in die Aufnahmenut 8 der Profilschiene 7 des oberen Querholmes sowie in die Einschubnut 14 der weiteren Profilschiene 12 des unteren Querholmes 13 eingeschoben werden.

Bei der in Fig. 8 dargestellten Ausführungsform ist die Profilschiene zweiteilig ausgeführt. Sie besteht aus einer am unteren Querholm 13 des Außenrahmens 1 angeordneten Grundschiene 12a und einer Aufsatzschiene 12b, die an die Grundschiene 12a angesetzt, vorzugsweise aufgeschoben ist. Diese Aufsatzschiene 12b enthält die Einschubnut 14 für das jeweilige Zubehörteil. Bei stets gleicher, im Werk angebrachter Grundschiene 12a lassen sich auf diese Weise unterschiedliche Einschubnuten 14 verwirklichen, die dem jeweiligen Zubehörteil angepaßt sind.

**Bezugszeichenliste:**

1 Außenrahmen
2 Absatz
3 Außenwand
4 Befestigungsrahmen
5 Fensterscheibe
6 Scharnierschiene
7 Profilschiene
8 Aufnahmenut
9 Traggestell
10 Markise
11 Befestigungsschuh
12 weitere Profilschiene
12a Grundschiene
12b Aufsatzschiene
13 unterer Querholm
14 Einschubnut
15 Außenfläche
16 Befestigungsnut
17 Längskanten
18 Schneeabweiser
19a Wäschetrockner
19b Utensilientaschen
19c Drahtkörbe
20 Isoliermatte

**Ansprüche**

1. Zweiteiliger Fensterrahmen, insbesondere für Wohnanhänger, Wohnmobile oder dgl., dessen Außenrahmen zwecks Aufnahme des oberen Randes der Fensterscheibe bzw. zur Anlenkung einer am oberen Rand der Fensterscheibe angeordneten Scharnierschiene mit einer Profilschiene versehen ist, die mit einer über die gesamte Breite des oberen Querholms des Außenrahmens verlaufenden Aufnahmenut versehen ist, **dadurch gekennzeichnet,**
daß am unteren Querholm (13) des Fensterrahmens eine über dessen gesamte Breite verlaufende weitere Profilschiene (12) mit einer Einschubnut (14) zur Anbringung eines Zubehörteils (9,10,18,19a,19b,19c,20) ausgebildet ist.

2. Fensterrahmen nach Anspruch 1, dadurch gekennzeichnet, daß die weitere Profilschiene (12) mit der Außenfläche (15) des unteren Querholmes (13) bündig abschließend in diesem befestigt ist.

3. Fensterrahmen nach Anspruch 2, dadurch gekennzeichnet, daß die weitere Profilschiene (12) ihrerseits in einer Befestigungsnut (16) sitzt, die sich über die gesamte Breite des unteren Querholms (13) erstreckt.

4. Fensterrahmen nach einem der Ansprüche 1 bis 3, dadurch gekennzeichnet, daß mindestens ein Befestigungsschuh (11) des Zubehörteils (9,10,18,19a,19b,19c) verschiebbar in der Einschubnut (14) angeordnet ist.

5. Fensterrahmen nach Anspruch 4, dadurch gekennzeichnet, daß der Befestigungsschuh (11) das untere Ende eines Traggestells (9) bildet.

6. Fensterrahmen nach Anspruch 4, dadurch gekennzeichnet, daß der Befestigungsschuh (11) eine obere Aufhängung für einen unterhalb des Fensterrahmens angeordneten Wäschetrockner (19a), für Utensilientaschen (19b) oder für Drahtkörbe (19c) bildet.

7. Fensterrahmen nach einem der Ansprüche 1 bis 3, dadurch gekennzeichnet, daß in der Einschubnut (14) ein Keder einer andererseits in der Aufnahmenut (8) gehaltenen Isoliermatte (20) verschiebbar sitzt.

8. Fensterrahmen nach Anspruch 1, dadurch gekennzeichnet, daß die untere Profilschiene (12) zweiteilig aus einer am unteren Querholm (13) des Außenrahmens (1) angeordneten Grundschiene (12a) und einer an diese Grundschiene (12a) ansetzbaren Aufsatzschiene (12b) ausgebildet ist, die ihrerseits die Einschubnut (14) zur Anbringung eines Zubehörteils (9,10,18,19a,19b,19c,20) aufweist.

# Fig. 1

Fig.7

Fig.2

Fig.3

# Fig. 4

# Fig. 5

# Fig. 6

19a

12

13

12

13

19b

12

13

19c

EP 0 374 447 A1

# Fig. 8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | AU-A- 545 639 (AMPLIFORM PTY. LTD) * Seite 3, Zeile 10 - Seite 6, Zeile 25; Figuren 1-5 * --- | 1,4,5 | E 04 F 10/02 E 04 F 10/08 E 06 B 7/28 |
| D,A | DE-U-8 712 759 (SEITZ GmbH) * Seite 4, Zeile 8 - Seite 5, Zeile 13; Figuren 1,2 * --- | 1,2,4 | |
| A | US-A-3 934 924 (DILIBERTI) * Spalte 2, Zeile 48 - Spalte 4, Zeile 15; Figuren 1-6 * --- | 1,3,5,8 | |
| A | US-A-3 289 351 (FORD) * Spalte 3, Zeile 30 - Spalte 8, Zeile 18; Figuren 1-14 * --- | 1,7 | |
| A | FR-A-1 399 122 (SCHMIDT) --- | | |
| A | FR-A- 763 757 (DELAHAYE & Cie) ----- | | |

**RECHERCHIERTE SACHGEBIETE (Int. Cl.5)**

E 04 F
E 06 B
B 60 P

**Der vorliegende Recherchenbericht wurde für alle Patentansprüche erstellt**

| Recherchenort | Abschlußdatum der Recherche | Prüfer |
|---|---|---|
| DEN HAAG | 07-03-1990 | AYITER J. |